(19) **Europäisches Patentamt**

**European Patent Office**

**Office européen des brevets**

(11) **EP 1 399 696 B1**

(12) **EUROPEAN PATENT SPECIFICATION**

(45) Date of publication and mention
of the grant of the patent:
**17.05.2006 Bulletin 2006/20**

(51) Int Cl.:
**F24D 10/00** (2006.01)

(21) Application number: **01979154.0**

(22) Date of filing: **23.10.2001**

(86) International application number:
**PCT/SE2001/002320**

(87) International publication number:
**WO 2002/035154 (02.05.2002 Gazette 2002/18)**

(54) **A DISTRICT HEATING ARRANGEMENT, AND A METHOD FOR OPERATING A DISTRICT HEATING ARRANGEMENT**

FERNHEIZUNGSANORDNUNG UND VERFAHREN ZUM BETRIEB EINER FERNHEIZUNGSANORDNUNG

INSTALLATION DE CHAUFFAGE CENTRALISE, ET PROCEDE DE FONCTIONNEMENT CORRESPONDANT

(84) Designated Contracting States:
**AT BE CH CY DE DK ES FI FR GB GR IE IT LI LU MC NL PT SE TR**
Designated Extension States:
**LT LV**

(30) Priority: **24.10.2000 SE 0003855**

(43) Date of publication of application:
**24.03.2004 Bulletin 2004/13**

(73) Proprietor: **Alfa Laval Corporate AB**
**22100 Lund (SE)**

(72) Inventors:
• **ENANDER, Anders, Patrik, Torbjörn**
**S-413 28 Göteborg (SE)**
• **ENGSTRÖM, Jan, Anders, Ake**
**S-371 40 Karlskrona (SE)**
• **HELIN, PerOla, Magnus**
**S-372 36 Ronneby (SE)**
• **LARSSON, Jan, Erik**
**S-372 37 Ronneby (SE)**
• **PERSSON, Mats, Henrik**
**S-372 39 Ronneby (SE)**

(74) Representative: **Berglund, Stefan**
**Bjerkéns Patentbyra KB**
**Östermalmsgatan 58**
**114 50 Stockholm (SE)**

(56) References cited:
| | |
|---|---|
| EP-A1- 0 000 401 | EP-A1- 0 048 517 |
| EP-A1- 0 048 518 | EP-A1- 0 306 914 |
| WO-A1-97/08499 | DE-A- 2 655 513 |
| DE-A1- 3 505 082 | DE-A1- 4 333 270 |
| DE-A1- 19 604 189 | DE-A1- 19 618 415 |
| DE-A1- 19 859 364 | DE-B- 1 253 429 |
| DE-U1- 20 003 685 | FR-A- 2 651 866 |
| GB-A- 2 171 506 | SE-B- 444 065 |
| SE-B- 464 428 | US-A- 4 766 553 |
| US-A- 4 916 642 | US-A- 5 319 641 |
| US-A- 5 711 480 | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 399 696 B1

**Description**

THE BACKGROUND OF THE INVENTION AND PRIOR ART

In general, the present invention refers to the supervision and maintenance of district heating arrangements having a large number of local units, frequently called subcentral units, which include a heat-exchanger. By maintenance is in the present application meant repairs; adjustment of different components of the local unit, such as valves, pumps, sensors etc.; cleaning of different components of the local unit, such as various passages of the heat exchanger for primary and secondary fluids, valves, pipe conduits; exchange of components or the whole local unit etc.

More precisely, the present invention refers to a district heating arrangement as defined in the preamble of claim 1, see FR-A-2 651 866.

The invention also refers to a method for a district heating arrangement as defined in the preamble of claim 22.

Such district heating arrangements have traditionally been supervised by a maintenance operator, which in any successive order has visited the different local units and made readings of different parameters of the local units. These readings have then been utilised, normally on a later occasion, for determining the condition of the local unit and if it requires maintenance, such as cleaning or repair. The basis for such determinations are thus to be found in historical data. The readings have also been performed at different points of time for different local units.

In a report from Svenska Fjärrvärmeföreningen, FVF 2000:03 AVKYLNINGEN I ETT FJÄRRVÄRMESYSTEM, the importance of all local units in a district heating arrangement operating efficiently is described, i.e. with a proper cooling of the primary fluid flowing through the local unit. In order to supervise the cooling of the different local units, it is proposed to register the hour mean values or 24-hours mean values of data including the temperatures of the primary fluid, which is supplied to and leaves, respectively, the local unit, the outdoor temperature, actual load output and the flow of primary fluid through the local unit.

The patent literature also describes supervision of individual heating devices, which does not form a part of a common district heating arrangement. GB-B-2 171 506 discloses an individual plate heat-exchanger having a number of sensors for sensing different parameters, including pressure and temperatures. The sensors are connected to a microprocessor for displaying the efficiency of the heat-exchanger. The microprocessor provides data, alarm signals or control signals based on the sensed parameters. By means of such an alarm signal, a user may obtain information that the heat-exchanger needs to be cleaned.

DE-U-200 03 685 discloses an individual device for heating a house. The device is of a conventional type with an oil burner, for instance. The device includes control equipment and data storing capacity for storing of maintenance intervals, possibly appearing deficiencies and an identification code. These stored data may be transferred, by means of radio communication, to a service unit for initiating of service, repair etc. of the device.

SUMMARY OF THE INVENTION

The object of the present invention is to improve the possibilities of supervising the efficiency of a district heating arrangement. More precisely, it is aimed at a simple and quick determination of the local unit of the district heating arrangement, which has the lowest efficiency and which is in the greatest need of maintenance.

This object is obtained by the arrangement initially defined, which is characterised by the features defined in the characterizing portion of claim 1.

By such an arrangement, one may in an easy manner obtain an efficient supervision of the function of the different local units in the district heating arrangement. Since the instantaneous value of said first parameter of each local unit is available to said second means, it is possible to determine, at each moment, the local unit, which for the moment is operating with the lowest efficiency and which thus has the greatest need of maintenance in the form of cleaning, repair or adjustment of different components of the local unit. Said second means is by such an arrangement realised in an easy manner by means of a normal computer, which receives the instantaneous values of the first parameters via for instance any communication protocol. All the local units in such an arrangement have substantially the same operation conditions with regard to the outdoor temperature, the sun, precipitation etc. Consequently, it is possible to make such a reliable determination on the basis of merely one instantaneous value of said first parameter. This is also possible even if the local units are not of the same type. They may for instance be dimensioned in different manners and include a different number of heat-exchangers. The different local units may also have different ages. Thanks to the fact that the determination may be made on the basis of merely one instantaneous value from the different local units, the arrangement does not need to include any extensive memory, for instance at the second means.

According to an embodiment of the invention, said second means are arranged to compare the value of said first parameter for the local units and to provide an order of rank of the different local units with regard to the need of maintenance of the local units. Such an order of rank may in an easy manner be realised as a list by means of the above mentioned computer of the second means, for instance. The software required for producing such a list is relatively simple, especially in the cases that the instantaneous value of said first parameter has been processed to a comparable value of the respective local units. It is of course also, within the scope of the present invention, possible to make such a processing of the instantaneous values at the second means, or to make a part-processing at the local units and a final processing by means of the second means. After the performance of the maintenance at a local unit, a new determination may be made on the basis of a new instantaneous value. It may then easily be established if the maintenance had the intended effect, i.e. if the local unit does not any longer have any need of maintenance. Furthermore, the position of the local unit in said order of rank may be determined in an easy manner.

According to a further embodiment of the invention, said first means are arranged to provide continuously an actual instantaneous value of said first parameter. The first means may thus continuously sense the value of the first parameter and deliver, for instance, this value via the communication devices when required by the second means. The first communication device of each local unit may then advantageously be arranged to permit said communication of such an actual instantaneous value at a substantially arbitrary point of time. Furthermore, each local unit may advantageously include a digital computer, which at least partly includes said first means and is arranged to transfer, in an automatic manner, the instantaneous value of said first parameter to said second means via said communication devices. For instance, said first means may include one or several sensors, which provide the instantaneous value of the pressure and/or temperatures of the primary fluid and the secondary fluid, respectively, wherein the digital computer from these parameters calculates an instantaneous value of another parameter, which may function as a comparison value with other local units.

According to a further embodiment of the invention, said first means includes a first sensor, which is arranged to sense the temperature of the primary fluid when it leaves the heat-exchanger device of the local unit, wherein said parameter is related to this temperature. This temperature of the primary fluid is a substantial parameter in this connection indicating the efficiency of the operation of the local unit, i.e. the size of the cooling. In a simple embodiment, this temperature may form the first parameter. In more sophisticated embodiments, this temperature may suitably form a part of the first parameter.

According to a further embodiment of the invention, said first means also includes a second sensor, which is arranged to sense the temperature of the primary fluid supplied to the heat-exchanger device of the local unit, wherein said parameter is related to this temperature. If consideration is taken also to the temperature of the primary fluid supplied to the heat-exchanger device, an even more improved measure of the efficiency or cooling of the local unit is obtained.

According to a further embodiment of the mentioned, said first means includes a third sensor, which is arranged to sense the temperature of the secondary fluid when it leaves the heat-exchanger device of the local unit, wherein said parameter is related to this temperature. In the same way, said first means may also include a fourth sensor, which is arranged to sense the temperature of the secondary fluid supplied to the heat-exchanger device of the local unit, wherein said parameter is related to this temperature.

According to a further embodiment of the invention, said first means are arranged to calculate a logarithmic mean temperature difference from the temperatures sensed by the first, second, third and fourth sensors, wherein said parameters are related to the so calculated temperature difference. Such a logarithmic mean temperature difference is a conventional measure of the efficiency of a heat-exchanger device in a local unit in a district heating arrangement.

According to a further embodiment of the invention, said first means are arranged to calculate NTU-values from the temperatures sensed by the first, second, third and fourth sensors, wherein said parameter is related to these NTU-values. Such NTU-values may also be utilised for determining the efficiency of the different heat-exchanger devices and, for instance, for determining if a heat-exchanger is dirty and needs to be cleaned. A heat-exchanger having a large NTU-value is more efficient than a heat-exchanger with a small NTU-value.

According to a further embodiment of the invention, the conduit network includes a return conduit for the transport of primary fluid from the local units back to the central unit, wherein the arrangement includes a sensor, which is arranged to sense the temperature of the primary fluid in the return conduit and wherein said parameter is related to this temperature of the primary fluid. By such a sensor, it is possible to relate the common temperature of the primary fluid in the return conduit to the temperatures sensed by the first sensor. The difference between these temperatures of the primary fluid, re-circulated to the central unit, defines if a local unit is better or worse than the average of temperatures of the primary fluid leaving the different heat-exchanger devices of the local units. By comparing these different temperature differences for the different local units, one may thus form an order of rank of the cooling capability of the local units in the arrangement.

According to a further embodiment of the invention, said first means are arranged to provide the size of the flow of the hot primary fluid through the heat-exchanger device, wherein said parameter is related to this size of the flow. If the temperature difference mentioned above for each local unit is multiplied with the size of the flow, a parameter, which defines the weighted contribution of the local unit to the total temperature of the primary fluid flowing through the return conduit is obtained. By comparing these numbers for different local units, one may obtain a weighted order of rank of which local units are worst(the largest negative number) and which are the best (the largest positive number) with regard to the cooling, i.e. such a parameter defines the size of the influence of the local unit on the efficiency of the whole district heating arrangement.

According to a further embodiment of the invention, each local unit includes a control valve for controlling the flow of the hot primary fluid through the heat-exchanger device. Advantageously, said parameter may also be related to a valve position of the control valve. Also such a parameter gives a measure of the flow through the heat-exchanger device of the local unit.

According to a further embodiment of the invention, said first means are arranged to provide a pressure difference between the primary fluid supplied to the local unit and the primary fluid leaving the local unit, wherein said parameter is related to this pressure difference.

According to a further embodiment of the invention, said communication devices include means for communication by means of radio waves. The communication may also take place via a mobile telephone network or via a computer communication network, for instance an Intranet or via the Internet. Such a solution offers communication over large distances by means of open communication protocols, for instance TCP/IP. It is also possible to let said communication devices include means for communication via a network for distribution of electricity.

The object is also obtained by the method initially defined, which is characterised by the method step defined in the characterizing portion of claim 22.

Advantageous embodiments of the method are defined in the dependent claims 24-32.

BRIEF DESCRIPTION OF THE DRAWINGS

The present invention is now to be explained more closely by means of a description of different embodiments and with reference to the drawings attached.

Fig 1     discloses schematically a district heating arrangement according to the invention.
Fig 2     discloses more closely a local unit of the district heating arrangement in Fig 1.

DETAILED DESCRIPTION OF DIFFERENT EMBODIMENTS OF THE INVENTION

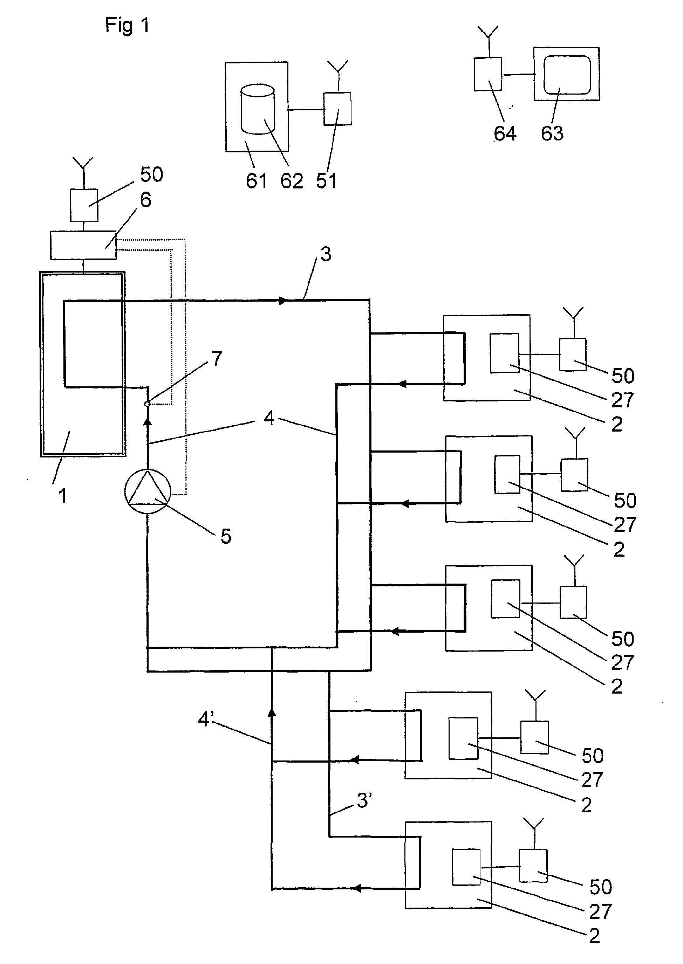

Fig 1 discloses a district heating arrangement, which includes a heat-producing central unit 1 for providing a hot primary fluid to a number of local units 2. The central unit 1 may include a heating-plant or combined power and heating plant, which produces energy by oil burning, for instance. However, the central unit 1 may be any unit, which provides a hot primary fluid, for instance waste heat from any industrial process.

Furthermore, the district heating arrangement includes a conduit network, which extends in a closed circuit via the central unit 1. The conduit network includes a feeding conduit 3 for the supply of the hot primary fluid to the local units 2, and a return conduit 4 for the re-circulation of the primary fluid to the central unit 1. In a manner known per se, the conduit network 3, 4 may include various sub-networks 3', 4', which all are included in the closed circuit. The district heating arrangement may also include subordinate networks (not disclosed), which are closed per se and connected to the conduit network 3, 4 or the sub-network 3', 4', via a heat-exchanger. The fluid in such a subordinate network is thus separated from the primary fluid. The district heating arrangement also includes at least one pump 5 for the circulation of the hot primary fluid via the conduit network 3, 4, 3', 4'. The various sub-networks 3', 4' may also include separate circulation pumps (not disclosed).

The local units 2 may be connected to the highest hierarchy of the conduit network 3, 4 or to any sub-network 3', 4'. Furthermore, the central unit 1 includes conventional control means 6 for controlling different components of the arrangement, for instance the pump 5. Furthermore, the arrangement includes a temperature sensor 7 for sensing the temperature of the primary fluid in the return conduit 4.

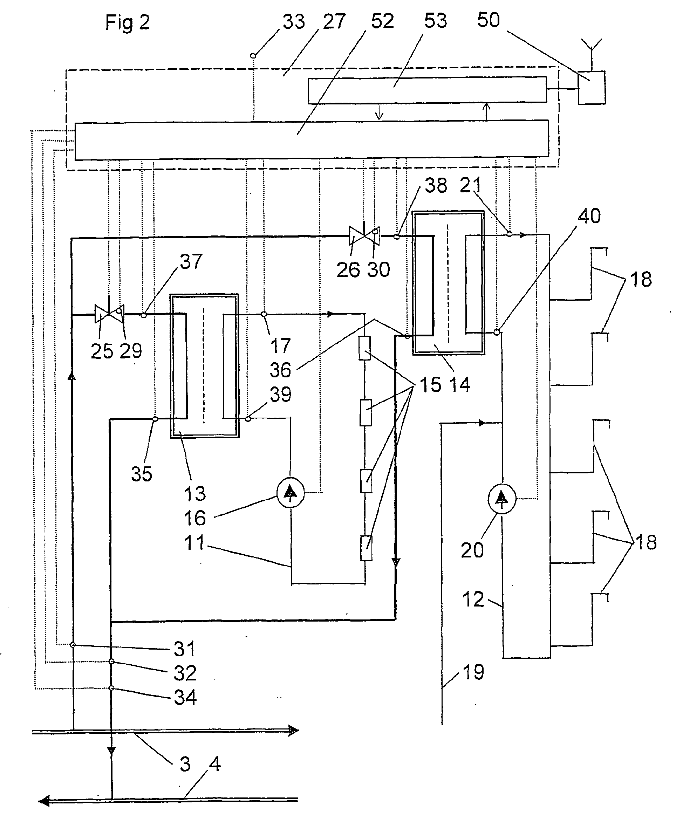

Fig 2 discloses more closely an embodiment of a local unit 2. It is to be noted that the local units 2 may be designed in many different manners within the scope of the present invention defined by the claims. The local unit 2 includes a first secondary circuit 11 for heating and a second secondary circuit 12 for the production of hot tap water. The first secondary circuit 11 is connected to the conduit network 3, 4 via a first heat-exchanger 13. The secondary circuit 12 is connected to the conduit network 3, 4 via a second heat-exchanger 14. In the embodiment disclosed, the heat-exchanger device of the local unit 2 thus includes two heat-exchanger 13, 14. However, it is to be noted that more or less heat-exchanger, may be included in this heat-exchanger device. In the first secondary circuit 11, the primary fluid from the conduit network 3, 4 may be conveyed directly into the radiators 15. It is also possible, for the first secondary circuit 11 and/or the second secondary circuit 12, to provide two successively arranged heat-exchangers for obtaining a preheating and a final heating of the secondary fluid in the respective secondary circuit 11, 12. The first secondary circuit 11 includes, except for the above mentioned radiators, also a circulation pump 16 and a temperature sensor 17. The second secondary circuit 12 includes a number of outlets 18, i.e. different forms of tap points for hot water. There is also an inlet conduit 19 for the supply of tap water. Also the second secondary circuit 12 includes, in the embodiment disclosed, a circulation pump 20 and a temperature sensor 21 for sensing the temperature of the outgoing secondary fluid.

It is to be noted, that the secondary circuit 12 does not need to be closed, i.e. there is no re-circulation of tap water via a pump 20.

On the primary side, the local unit 2 also includes means for realising the control of the operation of the local unit 2. These means include two control valves 25 and 26. The control valve 25 is arranged to permit control of the size of the flow of the hot primary fluid supplied to the first heat-exchanger 13. Such a control may be performed by adjustment of the valve position of the control valve 25. In such a way, the effect supplied to the first secondary circuit 11 may be controlled. In a corresponding manner, the second control valve 26 is arranged to control the size of the flow of the primary fluid supplied to the second heat-exchanger 14 by an adjustment of the valve position. The control valves 25, 26 and the pumps 16, 20 are connected to a control member 27. In the embodiment disclosed, there are also sensing members 29 and 30 for sensing the valve positions of the control valves 25 and 26, respectively. The valve positions of the control valves 25, 26 may alternatively be determined directly in the control member 27 as a function of the control signal given to the control valves 25, 26.

Furthermore, the local unit 2 may include pressure sensors 31, 32 for sensing the pressure of the primary fluid entering the local unit 2 and the primary fluid leaving the local unit 2, respectively. The pressure sensors 31 and 32 are suitably also connected to the control member 27.

Also the temperature sensors 17 and 21 are connected to the control member 27. Furthermore, the local unit may include a plurality of further temperature sensors, which are all connected to the control member 27. A temperature sensor 33 is arranged to sense the outdoor temperature. A temperature sensor 34 is arranged to sense the temperature of the primary fluid leaving the local unit 2 and two temperature sensors 35 and 36 are arranged to sense the temperature of the primary fluid, which leaves the first heat-exchanger 13 and the second heat-exchanger 14, respectively. Two temperature sensors 37 and 38 are arranged to sense the temperature of the primary fluid at the inlet of the first heat-exchanger 13 and at the inlet of the second heat-exchanger 14, respectively. Two temperature sensors 39 and 40 are also arranged to sense the temperature of the secondary fluid, which is supplied to the first heat-exchanger 13 and the second heat-exchanger 14, respectively.

The local units 2 also include a communication device 50, which permits communication, preferably in two directions, between the local units 2 and a receiving communication device 50. The communication devices 50 are connected to the control member 27. Also the central unit 1 may include such a communication device 50, which is connected to the schematically disclosed means 6.

The communication devices 50, 51 may operate according to communication principals know per se, for instance, the communication devices 50 may include means for transferring signals by means of radio waves. The communication devices 50 may also be arranged to communicate via the mobile telephone network. In this case, each local unit 5 may include a sort of mobile phone.

The communication devices 50, 51 may also include means for communicating via a computer network, for instance the Internet or for instance any public or private Intranet. In addition, the communication devices 50, 51 may include means for communication via a network for distribution of electricity. The communication may also take place via one or several of said communication manners.

The control members 27 of the various local units 2 include a digital computer having a first unit 52 for receiving the signals from the different sensors 17, 21, 29-40 and for controlling various functions of the local unit 2. In the embodiment disclosed, the first unit 52 of the control member 27 is arranged to control the control valves 25 and 26 and the pumps 16 and 20. The digital computer of the control device 27 may also include a second unit 53 for processing the signals from the different sensors 17, 21, 29-40, and a communication unit, which forms at least one part of the mentioned communication device 50. In the cases when the communication takes place with any data protocol, for instance TCP/IP, the communication device 50 is formed from conventional communication cards with associated software and modem, ISDN-units etc.

The arrangement also includes second means, by which the local units 2 and the central unit 1 are arranged to communicate via the communication devices 51 and 50. These second means may consist of one or several separate units, as is indicated in Fig 1, or form a part of the central unit 1. The second means include in the embodiment disclosed a digital computer 61, which has a common data base 62 arranged to receive information from all the local units 2 via the communication device 51.

The second means may also include a digital computer 63, which receives data from the data base 62 of the computer 61 and makes suitable processings. The computer 63 is accessible for a user. The computer 63 may be directly connected to the computer 61 or, as is disclosed in Fig 1, be arranged to communicate with the computer 61 by means of a communication device 64 via any network, for instance an Intranet or the Internet, via radio communication, via a network for the distribution of electricity etc. The arrangement may also include several computers 63 for several different users.

The arrangement according to the invention may for instance function in the following way. The sensors 7, 17, 21, 27, 29-40 of each of the local units sense an instantaneous value of a respective parameter and transfer this value to the first unit 52 of the control member 27. By means of the second unit 53 the received instantaneous values are processed with respect to local operation conditions, and a parameter, which is related to the efficiency of the units, is determined. Local operation conditions may, for instance, include the outdoor temperature, which is given by means of the sensor 33, or the size of the flow of the primary fluid, which is given by means of the sensors 29, 30 or by means of the control signals delivered to the control valves 25, 26.

Thereafter, the instantaneous value of this parameter is communicated in an automatic manner via the communication device 50 and 51 to the computer 61 and the data base 62. In the data base 62, there is thus the instantaneous value of the parameter for all local units 2. These values are compared with each other and a list of ranking is established. From this list, a user may recognise the local unit 2, which operates worst and which thus has the greatest need of maintenance. The list may be established by means of the computer 61 and stored in the data base 62. A user may thus via the computer 63 download a list and in such a way receive information about which local unit 2 that has the greatest need of maintenance. The list may be updated substantially continuously with new instantaneous values of the parameter. The establishment proper of the list may be administered in many various manners. For instance, the data base 62 may store merely the instantaneous values of the parameter, wherein the user takes out an actual list via the computer 63. A user may also receive the list directly from the computer 61, for instance as a print out or via a screen.

Each sensor 7, 17, 21, 27, 29-40 is arranged to provide such an actual instantaneous value of the parameter at substantially each point of time. This value may then be transferred to the computer 61 and the data base 62 either continuously or when the computer 61 asks for the value of the parameter at a substantially arbitrary point of time. It is also possible to transfer the signal from the sensors 7, 17, 21, 27, 29-40 directly to the computer 61 and to make possible calculations of the parameters centrally for all or some of the local units 2.

According to one embodiment, the signal from the sensors 34, 35, 36, which sense the temperature $t'_{out}$ of the primary fluid when it leaves the heat-exchanger devices 13, 14, is utilised either for each of the heat-exchanger devices 13, 14 separately or the common temperature downstream of both the heat-exchanger devices 13, 14. This temperature $t'_{out}$ may form the parameter, which is to be compared and gives a measure of the efficiency of the cooling of the heat-exchanger devices 13, 14. Advantageously, this temperature $t'_{out}$ may be set in relation to the signal from the sensor 7, i.e. the temperature of the primary fluid before it is supplied to the central unit 1 and when it is located downstream of the last local unit 2. The difference between these temperatures of the primary fluid, which is re-circulated to the central unit 1, defines if a local unit 2 is better or worse than the average. If this temperature difference is multiplied with the size of the flow through the local unit 2, a parameter, which defines the weighted contribution of the unit 2 to the total temperature of the primary fluid flowing through the return conduits 4, is given. By comparing these numbers for different local units 2, one may have a weighted_order of rang of the local units 2, which are the worst (largest negative numbers) and which are the best (largest positive numbers) with regard to the cooling.

Furthermore, the signal from the sensors 37 and/or 38, which sense the temperature $t'_{in}$ of the primary fluid supplied to the heat-exchanger devices 13, 14, is utilised for the determination of the parameter. If also the temperature $t'_{in}$ of the primary fluid supplied to the heat-exchanger device is considered, an even better measure of the efficiency or the cooling of the local unit 2 is obtained. The signals from the sensors 17 and 21, which sense the temperature $t''_{out}$ of the secondary fluid when it leaves the respective heat-exchanger device 13, 14, and the signal from the sensors 39, 40, which sense the temperature $t''_{in}$ of the secondary fluid supplied to the respective heat-exchanger device 13, 14, may also be utilised for the determination of the parameter to be compared. By means of these signals the logarithmic mean temperature difference for the respective heat-exchanger 13, 14 may be calculated according to the formula:

$$Lmtd = \frac{(t'_{in} - t''_{out}) - (t'_{out} - t''_{in}}{(t'_{in} - t''_{out})/(t'_{out} - t''_{in})} \ .$$

By means of these temperatures $t'_{out}$, $t'_{in}$, $t''_{out}$, $t''_{in}$, so called NTU-values may also be calculated. These may be expressed as

$$Theta1 = (t'_{in} - t'_{out})/lmtd$$

$$Theta2 = (t''_{out} - t''_{in})lmtd.$$

Since Theta1 and Theta2 are compared for the different heat-exchangers 13 and 14, also a measure of the efficiency of the different heat-exchanger 13, 14 of the different local units 2 is obtained. It is to be noted, that a comparison of Theta1, which refers to the primary side of the heat-exchangers 13, 14, for the different local units 2 is sufficient for determining an order of rang of the need of maintenance of the heat-exchangers 13, 14. Since the size of the flow of primary fluid through the heat-exchanger 13, 14 also is considered, it may be determined how dirty these heat-exchangers are.

The invention is not limited to the embodiments disclosed but may be varied and modified within the scope of the following claims.


**Claims**

1.  A district heating arrangement including a heat-producing central unit (1) for providing a hot primary fluid, a number of local units (2), which each includes a heat-exchanger device (13, 14), and a conduit network (3, 4, 3', 4'), which includes a feeding conduit (3, 3') for transporting the primary fluid from said heat-producing unit (1) to each local unit (2), wherein each local unit (2) is connected to the feeding conduit (3, 3') and arranged to receive the primary fluid through a primary side of the heat-exchanger device (13, 14) for transfer of heat to a secondary fluid, which flows through a secondary side of the heat-exchanger device (13, 14), wherein each of said local units (2) includes first means (7, 17, 21, 27, 29-40), which are arranged to provide at least one first parameter that is related to the efficiency of said heat transfer, **characterised in**
    **that** each local unit (2) includes a first communication de vice (50), which is arranged to communicate an instantaneous value of said first parameter to a second communication device (51) of the arrangement, and that the arrangement includes second means (61 - 63) including a digital computer, which co-operate with the second communication device (51, 64) and are arranged to determine the local unit (2) that has the largest need of maintenance depending on the instantaneous value of said first parameter, wherein it is determined that the local unit with the lowest efficiency has the greatest need of maintenance.

2.  An arrangement according to claim 1, **characterised in that** said second means (61 - 63) are arranged to compare the value of said first parameter for the local units (2) and to provide an order of rank of the local units (2) with regard to the need of maintenance of the local units (2).

3.  An arrangement according to any one of the preceding claims, **characterised in that** said first means (7, 17, 21, 27, 29-40) are arranged to provide continuously an actual instantaneous value of said first parameter.

4.  An arrangement according to any one of the preceding claims, **characterised in that** the first communication device (50) of each local unit (2) is arranged to enable said communication of such an actual instantaneous value at a substantially arbitrary point of time.

5.  An arrangement according to any one of the preceding claims, **characterised in that** each local unit (2) includes a digital computer (52, 53), which at least partly includes
    said first means (7, 17, 21, 27, 29-40) and is arranged to transfer in an automatic manner the instantaneous value of said first parameter to said second means via said communication devices (50, 51).

6.  An arrangement according to any one of the preceding claims, **characterised in that** said first means (7, 17, 21, 27, 29-40) includes a first sensor (34-36), which is arranged to sense the temperature of the primary fluid when it leaves the heat-exchanger device (13, 14) of the local unit (2), wherein said parameter is related to this temperature.

7.  An arrangement according to claim 6, **characterised in that** said first means (7, 17, 21, 27, 29-40) includes a second sensor (37, 38), which is arranged to sense the temperature of the primary fluid that is supplied to the heat-exchanger device (13, 14) of the local unit (2), wherein said parameter is related to this temperature.

8.  An arrangement according to any one of claims 6 and 7, **characterised in that** said first means (7, 17, 21, 27, 29-40) includes a third sensor (17, 21), which is arranged to sense the temperature of the secondary fluid when it leaves the heat-exchanger device (13, 14) of the local unit(2), wherein said parameter is related to this temperature.

9.  An arrangement according to claim 8, **characterised in that** said first means (7, 17, 21, 27, 29-40) includes a fourth sensor (39, 40), which is arranged to sense the temperature of the secondary fluid that is supplied to the heat-exchanger device (13, 14) of the local unit (2), wherein said parameter is related to this temperature.

10. An arrangement according to claims 6 - 9, **characterised in that** said first means (7, 17, 21, 27, 29-40) are arranged to calculate a logarithmic mean temperature difference from the temperatures sensed by the first, second, third and fourth sensors (17, 21, 34-40), wherein said parameter is related to the so calculated temperature difference.

11. An arrangement according to claim 10, **characterised in that** said first means (7, 17, 21, 27, 29-40) are arranged to calculate NTU-values from the temperatures sensed by the first, second, third and fourth sensors (17, 21, 34-40), wherein said parameter is related to these NTU-values.

12. An arrangement according to any one of the preceding claims, **characterised in that** the conduit network (3, 3', 4, 4') includes a return conduit (4, 4') for transporting the primary fluid from the local units (2) back to the central unit (1), wherein the arrangement includes a sensor (7), which is arranged to sense the temperature of the primary fluid in the return conduit (4, 4'), and wherein said parameter is related to this temperature of the primary fluid.

13. An arrangement according to any one of the preceding claims, **characterised in that** said first means (29-32) are arranged to provide the size of the flow of the hot primary fluid through the heat-exchanger device (13, 14), wherein said parameter is related to the size of this flow.

14. An arrangement according to any one of the preceding claims, **characterised in that** each local unit (2) includes a control valve (25, 26) for controlling the flow of the hot primary fluid through the heat-exchanger device (13, 14).

15. An arrangement according to claim 14, **characterised in that** said first means (27, 29-32) are arranged to provide a valve position of the control valve (25, 26), wherein said parameter is related to this valve position.

16. An arrangement according to any one of the preceding claims, **characterised in that** said first means (31, 32) are arranged to provide a pressure difference between the primary fluid supplied to the local unit (2) and the primary fluid leaving the local unit (2), wherein said parameter is related to this pressure difference.

17. An arrangement according to any one of the preceding claims, **characterised in that** said communication devices (50, 51, 64) include means for communication by means of radio waves.

18. An arrangement according to claim 17, **characterised in that** said communication devices (50, 51, 64) include means for communication via a mobile telephone network.

19. An arrangement according to any one of the preceding claims, **characterised in that** said communication devices (50, 51, 64) include means for communication via a computer network.

20. An arrangement according to any one of the preceding claims, **characterised in that** said communication devices (50, 51, 64) include means for communication via the Internet.

21. An arrangement according to any one of the preceding claims, **characterised in that** said communication devices (50, 51, 64) include means for communication via an network for distribution of electricity.

22. A method for a district heating arrangement including a heat-producing central unit for providing a hot primary fluid, a number of local units, which each includes a heat-exchanger device, and a conduit network, which includes a feeding conduit for transporting the primary fluid from said heat-producing unit, wherein the method includes the steps of:

supplying the hot primary fluid to said local units via the feeding conduit for transfer of heat to a secondary fluid flowing through the heat-exchanger device,
providing at least one first parameter, which is related to the efficiency of said heat transfer by means of first means, **characterised by**
communication of an instantaneous value of said first parameter by means of a first communication device from each local unit to a second communication device of the arrangement, and
determining the local unit which has the largest need of maintenance depending on the instantaneous value of said first parameter by means of second means, wherein it is determined that the local unit with the lowest efficiency has the greatest need of maintenance.

23. A method according to claim 22, **characterised in that** said communication includes an automatic transfer of the instantaneous value of said first parameter to said second means.

**24.** A method according to any one of claims 22 and 23, **characterised in that** said parameter is related to a first temperature of the primary fluid when it leaves the heat-exchanger device of the local unit.

**25.** A method according to claim 24, **characterised in that** said parameter is related to a second temperature of the primary fluid supplied to the heat-exchanger device of the local unit.

**26.** A method according to any one of claims 24 and 25, **characterised in that** said parameter is related to a third temperature of the secondary fluid when it leaves the heat-exchanger device of the local unit.

**27.** A method according to claim 26, **characterised in that** said parameter is related to a fourth temperature of the secondary fluid supplied to the heat-exchanger device of the local unit.

**28.** A method according to claims 24-27, **characterised in that** said parameter is related to a logarithmic mean temperature difference calculated from the first, second, third and fourth temperature.

**29.** A method according to claim 28, **characterised in that** said parameter is related to NTU-values calculated from the temperatures sensed by the first, second, third and fourth sensor.

**30.** A method according to any one of claims 22-29, **characterised in that** said-parameter is related to the size of the flow of the hot primary fluid through the heat-exchanger device.

**31.** A method according to any one of claims 22-30, **characterised in that** said parameter is related to a valve position of a control valve for controlling the flow of the hot primary fluid through the heat-exchanger device.

**32.** A method according to any one of claims 22-31, **characterised in that** said parameter is related to a pressure difference between the primary fluid supplied to the local unit and the primary fluid leaving the local unit.


**Patentansprüche**

**1.** Fernwärmeanordnung mit einer wärmeproduzierenden Zentraleinheit (1) zum Liefern eines heißen Primärfluidums sowie einer Anzahl von lokalen Einheiten (2), von denen jede eine Wärmetauschvorrichtung (13, 14) umfasst, und einem Leitungsnetzwerk (3, 4, 3', 4'), das einen Speisekreis (3, 3') zum Transportieren des Primärfluidums von der wärmeproduzierenden Einheit (1) an jede lokale Einheit (2) umfasst, wobei jede der lokalen Einheiten (2) mit dem Speisekreis (3, 3') verbunden ist und das Primärfluidum durch eine Primärseite der Wärmetauschvorrichtung (13, 14) zur Übertragung der Wärme an ein Sekundärfluidum, empfängt, das durch eine Sekundärseite der Wärmetauschvorrichtung (13, 14) strömt, wobei jede der lokalen Einheiten (2) eine erste Einrichtung (7, 17, 21, 27, 29 - 40) umfasst, die dazu dient, mindestens einen ersten Parameter zu liefern, der sich auf die Effizienz der Wärmeübertragung bezieht, **dadurch gekennzeichnet, dass**
jede lokale Einheit (2) eine erste Kommunikationsvorrichtung (50) umfasst, die dazu dient, einen Momentanwert des ersten Parameters an eine zweite Kommunikationsvorrichtung (51) der Anordnung zu übertragen, und dass die Anordnung eine zweite Einrichtung (61 - 63) mit einem Digitalcomputer umfasst, die mit der zweiten Kommunikationsvorrichtung (51, 64) zusammenarbeitet und dazu dient, die lokale Einheit (2) zu bestimmen, die den größten Wartungsbedarf in Abhängigkeit vom Momentanwert des ersten Parameters hat, wobei bestimmt wird, dass die lokale Einheit mit der niedrigsten Effizienz den größten Wartungsbedarf hat.

**2.** Anordnung nach Anspruch 1, **dadurch gekennzeichnet, dass** die zweite Einrichtung (61 - 63) dazu dient, den Wert des ersten Parameters für die lokalen Einheiten (2) zu vergleichen und eine Reihenfolge der lokalen Einheiten (2) im Hinblick auf den Wartungsbedarf der lokalen Einheiten (2) zu liefern.

**3.** Anordnung nach einem der vorangegangenen Ansprüche, **dadurch gekennzeichnet, dass** die erste Einrichtung (7, 17, 21, 27, 29 - 40) dazu dient, kontinuierlich einen aktuellen Momentanwert des ersten Parameters zu liefern.

**4.** Anordnung nach einem der vorangegangenen Ansprüche, **dadurch gekennzeichnet, dass** die erste Kommunikationsvorrichtung (50) jeder lokalen Einheit (2) die Kommunikation eines solchen aktuellen Momentanwertes zu einem im wesentlichen beliebigen Zeitpunkt ermöglicht.

**5.** Anordnung nach einem der vorangegangenen Ansprüche, **dadurch gekennzeichnet, dass** jede lokale Einheit (2) einen Digitalcomputer (52, 53) umfasst, der mindestens teilweise die erste Einrichtung (7, 17, 21, 27, 29 - 40) umfasst und dazu dient, automatisch den Momentanwert des ersten Parameters an die zweite Einrichtung über die Kommunikationsvornchtung (50, 51) zu übermitteln.

6. Anordnung nach einem der vorangegangenen Ansprüche, **dadurch gekennzeichnet, dass** die erste Einrichtung (7, 17, 21, 27, 29 - 40) einen ersten Sensor (34 - 36) umfasst, der dazu dient, die Temperatur des Primärfluidums zu erfassen, wenn es die Wärmetauschvorrichtung (13, 24) der lokalen Einheit (2) verlässt, wobei der Parameter sich auf diese Temperatur bezieht.

7. Anordnung nach Anspruch 6, **dadurch gekennzeichnet, dass** die erste Einrichtung (7, 17, 21, 27, 29 - 40) einen zweiten Sensor (37, 38) umfasst, der dazu dient, die Temperatur des Primärfluidums zu erfassen, das an die Wärmetauschvorrichtung (13, 14) der lokalen Einheit (2) geliefert wird, wobei der Parameter sich auf diese Temperatur bezieht.

8. Anordnung nach einem der Ansprüche 6 und 7, **dadurch gekennzeichnet, dass** die erste Einrichtung (7, 17, 21, 27, 29 - 40) einen dritten Sensor (17, 21) umfasst, der dazu dient, die Temperatur des Sekundärfluidums zu erfassen, wenn es die Wärmetauschvorrichtung (13, 14) der lokalen Einheit (27) verlässt, wobei der Parameter sich auf diese Temperatur bezieht.

9. Vorrichtung nach Anspruch 8, **dadurch gekennzeichnet, dass** die erste Einrichtung (7, 17, 21, 27, 29 - 40) einen vierten Sensor (39, 40) umfasst, der dazu dient, die Temperatur des Sekundärfluidums zu erfassen, das der Wärmetauschvorrichtung (13, 14) der lokalen Einheit (2) zugeführt wird, wobei der Parameter sich auf diese Temperatur bezieht.

10. Anordnung nach Anspruch 6 bis 9, **dadurch gekennzeichnet, dass** die erste Einrichtung (7, 17, 21, 27, 29 - 40) dazu dient, eine logarithmische mittlere Temperaturdifferenz aus den Temperaturen zu errechnen, wie sie von den ersten, zweiten, dritten und vierten Sensoren (17, 21, 34 - 40) erfasst wurden, wobei der Parameter sich auf die so berechnete Temperaturdifferenz bezieht.

11. Anordnung nach Anspruch 10, **dadurch gekennzeichnet, dass** die erste Einrichtung (7, 17, 21, 27, 29 - 40) dazu dient, NTU-Werte aus den Temperaturen zu errechnen, wie sie von den ersten, zweiten, dritten und vierten Sensoren (17, 21, 34 - 40) errechnet wurden, wobei der Parameter sich auf diese NTU-Werte bezieht.

12. Anordnung nach einem der vorangegangenen Ansprüche, **dadurch gekennzeichnet, dass** das Leitungsnetzwerk (3, 3', 4, 4') eine Rückführleitung (4, 4') zum Transportieren des Primärfluidums von den lokalen Einheiten (2) zurück zur Zentraleinheit (1) umfasst, wobei die Anordnung einen Sensor (7) umfasst, der dazu dient, die Temperatur des Primärfluidums in der Rückführleitung (4, 4') zu erfassen, und wobei der Parameter sich auf diese Temperatur des Primärfluidums bezieht.

13. Anordnung nach einem der vorangegangenen Ansprüche, **dadurch gekennzeichnet, dass** die erste Einrichtung (29 bis 32) dazu dient, die Größe der Strömung des heißen Primärfluidums durch die Wärmetauschvorrichtung (13, 14) zu liefern, wobei der Parameter sich auf die Größe dieser Strömung bezieht.

14. Anordnung nach einem der vorangegangenen Ansprüche, **dadurch gekennzeichnet, dass** jede lokale Einheit (2) ein Steuerventil (25, 26) zum Steuern der Strömung des heißen Primärfluidums durch die Wärmetauschvorrichtung (13, 14) umfasst.

15. Anordnung nach Anspruch 14, **dadurch gekennzeichnet, dass** die erste Einrichtung (27, 29 bis 32) dazu dient, eine Ventilposition des Steuerventils (25; 26) zu liefern, wobei der Parameter sich auf diese Ventilposition bezieht.

16. Anordnung nach einem der vorangegangenen Ansprüche; **dadurch gekennzeichnet, dass** die erste Einrichtung (31, 32) dazu dient, eine Druckdifferenz zwischen dem Primärfluidum, das an die lokale Einheit (2) geliefert wird, und dem Primärfluidum, das die lokale Einheit (2) verlässt, zu liefern, wobei der Parameter sich auf diese Druckdifferenz bezieht.

17. Anordnung nach einem der vorangegangenen Ansprüche, **dadurch gekennzeichnet, dass** die Kommunikationsvorrichtungen (50, 51, 64) eine Kommunikationseinrichtung mittels Radiowellen beinhalten.

18. Anordnung nach Anspruch 17, **dadurch gekennzeichnet, dass** die Kommunikationsvorrichtungen (50, 51, 64) eine Kommunikationseinrichtung über ein mobiles Telefonnetzwerk umfassen.

19. Anordnung nach einem der vorangegangenen Ansprüche, **dadurch gekennzeichnet, dass** die Kommunikationsvorrichtungen (50, 51, 64) eine Kommunikationseinrichtung mittels eines Computernetzwerks umfassen.

20. Anordnung nach einem der vorangegangenen Ansprüche, **dadurch gekennzeichnet, dass** die Kommunikationsvorrichtungen (50, 51, 64) eine Kommunikationseinrichtung über das Internet umfassen.

21. Anordnung nach einem der vorangegangenen Ansprüche, **dadurch gekennzeichnet, dass** die Kommunikationsvorrichtungen (50, 51, 64) eine Kommunikationseinrichtung über ein Netzwerk zur Verteilung von Elektrizität umfassen.

22. Verfahren für eine Fernwärmeanordnung mit einer wärmeproduzierenden Zentraleinheit zum Liefern eines heißen Primärfluidums sowie einer Anzahl von lokalen Einheiten, von denen jede eine Wärmetauschvorrichtung umfasst, und ein Leitungsnetzwerk, das eine Speiseleitung zum Transportieren des Primärfluidums von der wärmeproduzierenden Einheit umfasst, wobei das Verfahren die folgenden Schritte umfasst:

Liefern des heißen Primärfluidums an die lokalen Einheiten über die Speiseleitung zur Übertragung von Wärme an ein Sekundärfluidum, das durch die Wärmetauschvorrichtung strömt,
Liefern mindestens eines ersten Parameters, der sich auf die Effizienz der Wärmeübertragung mittels der ersten Einrichtung bezieht, **gekennzeichnet durch**
Kommunikation eines Momentanwertes des ersten Parameters mittels einer ersten Kommunikationsvorrichtung von jeder lokalen Einheit an eine zweite Kommunikationsvorrichtung der Anordnung und
Bestimmen der lokalen Einheit, die den größten Wartungsbedarf in Abhängigkeit von dem Momentanwert des ersten Parameters hat, mittels der zweiten Einrichtung, wobei bestimmt wird, dass die lokale Einheit mit der niedrigsten Effizienz den größten Wartungsbedarf hat.

23. Verfahren nach Anspruch 22, **dadurch gekennzeichnet, dass** die Kommunikation eine automatische Übertragung des Momentanwertes des ersten Parameters an die zweite Einrichtung umfasst.

24. Verfahren nach einem der Ansprüche 22 und 23, **dadurch gekennzeichnet, dass** sich der Parameter auf eine erste Temperatur des Primärfluidums bezieht, wenn es die Wärmetauschvorrichtung der lokalen Einheit verlässt.

25. Verfahren nach Anspruch 24, **dadurch gekennzeichnet, dass** sich der Parameter auf eine zweite Temperatur des Primärfluidums bezieht, wenn es der Wärmetauschvorrichtung der lokalen Einheit zugeführt wird.

26. Verfahren nach einem der Ansprüche 24 und 25, **dadurch gekennzeichnet, dass** sich der Parameter auf eine dritte Temperatur des Sekundärfluidums bezieht, wenn es die Wärmetauschvorrichtung der lokalen Einheit verlässt.

27. Verfahren nach Anspruch 26, **dadurch gekennzeichnet, dass** sich der Parameter auf eine vierte Temperatur des Sekundärfluidums bezieht, wenn es der Wärmetauschvorrichtung der lokalen Einheit zugeführt wird.

28. Verfahren nach Anspruch 24 bis 27, **dadurch gekennzeichnet, dass** sich der Parameter auf eine logarithmische mittlere Temperaturdifferenz bezieht, die aus der ersten, zweiten, dritten und vierten Temperatur errechnet wurde.

29. Verfahren nach Anspruch 28, **dadurch gekennzeichnet, dass** sich der Parameter auf NTU-Werte bezieht, die aus den von den ersten, zweiten, dritten und vierten Sensoren erfassten Temperaturen errechnet wurden.

30. Verfahren nach einem der Ansprüche 22 bis 29, **dadurch gekennzeichnet, dass** sich der Parameter auf die Größe der Strömung des heißen Primärfluidums durch die Wärmetauschvorrichtung bezieht.

31. Verfahren nach einem der Ansprüche 22 bis 30, **dadurch gekennzeichnet, dass** sich der Parameter auf eine Ventilposition eines Steuerventils zum Steuern der Strömung des heißen Primärfluidums durch die Wärmetauschvorrichtung bezieht.

32. Verfahren nach einem der Ansprüche 22 bis 31, **dadurch gekennzeichnet, dass** sich der Parameter auf eine Druckdifferenz zwischen dem Primärfluidum, das der lokalen Einheit zugeführt wird, und dem Primärfluidum, das die lokale Einheit verlässt, bezieht.

**Revendications**

1. Installation de chauffage centralisé comprenant une unité centrale de production de chaleur (1) pour fournir un fluide primaire chaud, un nombre d'unités locales (2), comprenant chacune un dispositif échangeur de chaleur (13, 14), et un réseau de conduites (3, 4, 3', 4') qui comprend une conduite d'alimentation (3, 3') pour le transport du fluide primaire depuis ladite unité de production de chaleur (1) vers chaque unité locale (2), dans laquelle chaque unité locale (2) est raccordée à la conduite d'alimentation (3, 3') et agencée pour recevoir le fluide primaire au travers d'un côté primaire du dispositif échangeur de chaleur (13, 14) pour transférer de la chaleur à un fluide secondaire qui circule au travers d'un côté secondaire du dispositif échangeur de chaleur (13, 14), dans laquelle chacune desdites unités locales (2) comprend des premiers moyens (7, 17, 21, 27, 29 - 40), qui sont agencés pour fournir au moins un premier paramètre qui est lié à l'efficacité dudit transfert de chaleur, **caractérisée en ce que** chaque unité locale (2) comprend un premier dispositif de communication (50), qui est agencé pour communiquer une valeur instantanée dudit premier paramètre à un deuxième dispositif de communication (51) de l'installation, et **en ce que** l'installation comprend des deuxièmes moyens (61 - 63) comprenant un ordinateur numérique, qui coopèrent avec le deuxième dispositif de communication (51, 64) et sont agencés pour déterminer l'unité locale (2) qui présente le besoin le plus important de maintenance en fonction de la valeur instantanée dudit premier paramètre, dans laquelle il est déterminé que l'unité locale avec l'efficacité la plus basse présente le besoin le plus important de maintenance.

2. Installation selon la revendication 1, **caractérisée en ce que** lesdits deuxièmes moyens (61 - 63) sont agencés pour comparer la valeur dudit premier paramètre pour les unités locales (2) et pour fournir un classement des unités locales (2) par rapport au besoin de maintenance des unités locales (2).

3. Installation selon l'une quelconque des revendications précédentes, **caractérisée en ce que** lesdits premiers moyens (7, 17, 21, 27, 29 - 40) sont agencés pour fournir en continu une valeur instantanée réelle dudit premier paramètre.

4. Installation selon l'une quelconque des revendications précédentes, **caractérisée en ce que** le premier dispositif de communication (50) de chaque unité locale (2), est agencé pour permettre ladite communication d'une valeur instantanée réelle de ce type à un point de temps essentiellement arbitraire.

5. Installation selon l'une quelconque des revendications précédentes, **caractérisée en ce que** chaque unité locale (2) comprend un ordinateur numérique (52, 53) qui comprend au moins partiellement lesdits premiers moyens (7, 17, 21, 27, 29 - 40) et est agencé pour transférer d'une manière automatique la valeur instantanée dudit premier paramètre vers lesdits deuxièmes moyens par l'intermédiaire desdits dispositifs de communication (50, 51).

6. Installation selon l'une quelconque des revendications précédentes, **caractérisée en ce que** lesdits premiers moyens (7, 17, 21, 27, 29 - 40) comprennent un premier capteur (34 - 36), qui est agencé pour capter la température du fluide primaire quand il quitte le dispositif échangeur de chaleur (13, 14) de l'unité locale (2), dans laquelle ledit paramètre est lié à cette température.

7. Installation selon la revendication 6, **caractérisée en ce que** lesdits premiers moyens (7, 17, 21, 27, 29 - 40) comprennent un deuxième capteur (37, 38), qui est agencé pour capter la température du fluide primaire qui est fourni au dispositif échangeur de chaleur (13, 14) de l'unité locale (2), dans laquelle ledit paramètre est lié à cette température.

8. Installation selon l'une quelconque des revendications 6 et 7, **caractérisée en ce que** lesdits premiers moyens (7, 17, 21, 27, 29 - 40) comprennent un troisième capteur (17, 21), qui est agencé pour capter la température du fluide secondaire quand il quitte le dispositif échangeur de chaleur (13, 14) de l'unité locale (2), dans laquelle ledit paramètre est lié à cette température.

9. Installation selon la revendication 8, **caractérisée en ce que** lesdits premiers moyens (7, 17, 21, 27, 29 - 40) comprennent un quatrième capteur (39, 40), qui est agencé pour capter la température du fluide secondaire qui est alimenté au dispositif échangeur de chaleur (13, 14) de l'unité locale (2), dans laquelle ledit paramètre est lié à cette température.

**10.** Installation selon les revendications 6 - 9, **caractérisée en ce que** lesdits premiers moyens (7, 17, 21, 27, 29 - 40) sont agencés pour calculer une différence de température moyenne logarithmique à partir de la température captée par les premier, deuxième, troisième et quatrième capteurs (17, 21, 34 - 40), dans laquelle ledit paramètre est lié à la différence de température ainsi calculée.

**11.** Installation selon la revendication 10, **caractérisée en ce que** lesdits premiers moyens (7, 17, 21, 27, 29 - 40) sont agencés pour calculer des valeurs NTU à partir des températures captées par les premier, deuxième, troisième et quatrième capteurs (17, 21, 34 - 40), dans laquelle ledit paramètre est lié à ces valeurs NTU.

**12.** Installation selon l'une quelconque des revendications précédentes, **caractérisée en ce que** le réseau de conduites (3, 3', 4, 4') comprend une conduite de retour (4, 4') pour transporter le fluide primaire depuis les unités locales (2) en retour vers l'unité centrale (1), dans laquelle l'installation comprend un capteur (7), qui est agencé pour capter la température du fluide primaire dans la conduite de retour (4, 4'), et dans laquelle ledit paramètre est lié à cette température du fluide primaire.

**13.** Installation selon l'une quelconque des revendications précédentes, **caractérisée en ce que** lesdits premiers moyens (29 - 32) sont agencés pour fournir la taille du débit du fluide primaire chaud au travers du dispositif échangeur de chaleur (13, 14), dans lequel ledit paramètre est lié à la taille de ce débit.

**14.** Installation selon l'une quelconque des revendications précédentes, **caractérisée en ce que** chaque unité locale (2) comprend une vanne de régulation (25, 26) pour réguler le débit du fluide primaire chaud au travers du dispositif échangeur de chaleur (13, 14).

**15.** Installation selon la revendication 14, **caractérisée en ce que** lesdits premiers moyens (27, 29 - 32) sont agencés pour fournir une position de vanne de la vanne de régulation (25, 26), dans laquelle ledit paramètre est lié à cette position de vanne.

**16.** Installation selon l'une quelconque des revendications précédentes, **caractérisée en ce que** lesdits premiers moyens (31, 32) sont agencés pour fournir une perte de charge entre le fluide primaire fourni à l'unité locale (2) et le fluide primaire quittant l'unité locale (2), dans laquelle ledit paramètre est lié à cette perte de charge.

**17.** Installation selon l'une quelconque des revendications précédentes, **caractérisée en ce que** lesdits dispositifs de communication (50, 51, 64) comprennent des moyens de communication au moyen d'ondes radio.

**18.** Installation selon la revendication 17, **caractérisée en ce que** lesdits dispositifs de communication (50, 51, 64) comprennent des moyens de communication par l'intermédiaire d'un réseau de téléphonie mobile.

**19.** Installation selon l'une quelconque des revendications précédentes, **caractérisée en ce que** lesdits dispositifs de communication (50, 51, 64) comprennent des moyens de communication par l'intermédiaire d'un réseau informatique.

**20.** Installation selon l'une quelconque des revendications précédentes, **caractérisée en ce que** lesdits dispositifs de communication (50, 51, 64) comprennent des moyens de communication par l'intermédiaire de l'Internet.

**21.** Installation selon l'une quelconque des revendications précédentes, **caractérisée en ce que** lesdits dispositifs de communication (50, 51, 64) comprennent des moyens de communication par l'intermédiaire d'un réseau de distribution de l'électricité.

**22.** Procédé pour une installation de chauffage centralisé comprenant une unité centrale de production de chaleur pour fournir un fluide primaire chaud, un nombre d'unités locales, comprenant chacune un dispositif échangeur de chaleur, et un réseau de conduites qui comprend une conduite d'alimentation pour transporter le fluide primaire depuis ladite unité de production de chaleur, dans lequel le procédé comprend les étapes de :

fourniture du fluide primaire chaud aux dites unités locales par l'intermédiaire de la conduite d'alimentation pour transférer de la chaleur vers un fluide secondaire circulant au travers du dispositif échangeur de chaleur,
fourniture d'au moins un premier paramètre, qui est lié à l'efficacité dudit transfert de chaleur au moyen de premiers moyens, **caractérisé par**
la communication d'une valeur instantanée dudit premier paramètre au moyen d'un premier dispositif de communication à partir de chaque unité locale vers un deuxième dispositif de communication de l'installation, et la détermination de l'unité locale qui présente le besoin le plus important de maintenance en fonction de la valeur instantanée dudit premier paramètre au moyen des deuxièmes moyens, dans lequel il est déterminé que l'unité locale avec l'efficacité la plus basse présente le besoin le plus important de maintenance.

23. Procédé selon la revendication 22, **caractérisé en ce que** ladite communication comprend un transfert automatique de la valeur instantanée dudit premier paramètre vers lesdits deuxièmes moyens.

24. Procédé selon l'une quelconque des revendications 22 et 23, **caractérisé en ce que** ledit paramètre est lié à une première température du fluide primaire quand il quitte le dispositif échangeur de chaleur de l'unité locale.

25. Procédé tel que revendiqué à la revendication 24, **caractérisé en ce que** ledit paramètre est lié à une deuxième température du fluide primaire alimenté au dispositif échangeur de chaleur de l'unité locale.

26. Procédé selon l'une quelconque des revendications 24 et 25, **caractérisé en ce que** ledit paramètre est lié à une troisième température du fluide secondaire quand il quitte le dispositif échangeur de chaleur de l'unité locale.

27. Procédé selon la revendication 26, **caractérisé en ce que** ledit paramètre est lié à une quatrième température du fluide secondaire alimenté au dispositif échangeur de chaleur de l'unité locale.

28. Procédé selon les revendications 24 - 27, **caractérisé en ce que** ledit paramètre est lié à une différence de température moyenne logarithmique calculée à partir des première, deuxième, troisième et quatrième températures.

29. Procédé selon la revendication 28, **caractérisé en ce que** ledit paramètre est lié à des valeurs NTU calculées à partir de températures captées par les premier, deuxième, troisième et quatrième capteurs.

30. Procédé selon l'une quelconque des revendications 22 - 29, **caractérisé en ce que** ledit paramètre est lié à la taille du débit du fluide primaire chaud au travers du dispositif échangeur de chaleur.

31. Procédé selon l'une quelconque des revendications 22 - 30, **caractérisé en ce que** ledit paramètre est lié à une position de vanne d'une vanne de régulation pour réguler le débit du fluide primaire chaud dans le dispositif échangeur de chaleur.

32. Procédé selon l'une quelconque des revendications 22 - 31, **caractérisé en ce que** ledit paramètre est lié à une perte de charge entre le fluide primaire fourni à l'unité locale et le fluide primaire quittant l'unité locale.

Fig 1

EP 1 399 696 B1

Fig 2

16